Europäisches Patentamt

European Patent Office

Office européen des brevets

(11) Publication number: **0 174 639 B1**

## EUROPEAN PATENT SPECIFICATION

(45) Date of publication of patent specification: **26.02.92**　(51) Int. Cl.5: **B60L 3/00**

(21) Application number: **85111437.1**

(22) Date of filing: **10.09.85**

(54) Electric railway car control device.

(30) Priority: **10.09.84 JP 190863/84**

(43) Date of publication of application:
**19.03.86 Bulletin 86/12**

(45) Publication of the grant of the patent:
**26.02.92 Bulletin 92/09**

(84) Designated Contracting States:
**DE GB IT**

(56) References cited:
**DE-A- 1 413 572**
**DE-C- 420 024**
**JP-A-59 288 01**
**US-A- 3 864 731**
**US-A- 4 425 535**

**BROWN BOVERI REVIEW, vol. 66, no. 12, December 1979, pages 764-777, Baden, CH; M. ROFFLER: "Class Ee6/6II convertor locomotives of the Swiss Federal Railways"**

(73) Proprietor: **MITSUBISHI DENKI KABUSHIKI KAISHA**
**2-3, Marunouchi 2-chome Chiyoda-ku Tokyo 100(JP)**

(72) Inventor: **Koyama, Shigeru c/o Mitsubishi Denki K.K.**
**Itami Works 1-1, Tsukaguchihonmachi 8-chome**
**Amagasaki-shi Hyogo(JP)**

(74) Representative: **Lehn, Werner, Dipl.-Ing. et al Hoffmann, Eitle & Partner Patentanwälte Arabellastrasse 4**
**W-8000 München 81(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The present invention relates to an electric railway car control device comprising: a master controller, for providing operating instructions; running direction detecting means for detecting a running direction of a railway car and producing an output signal representing the running direction; an inverter for driving an AC main electric motor; and control mode selecting means for comparing an instructed direction defined by an operating instruction provided by said master controller with the running direction defined by said output signal. A control device of this type is known from JP-A-59 28801. Such a device may be applied to a self-propelled railway car or railway engine, hereinafter referred to collectively as a railway car.

Heretofore, in controlling an electric railway car, forward driving, backward driving, forward braking and backward braking modes are established according to instructions from the driver.

If, in the case of a DC motor, a driving braking instruction is of a direction different from the present running direction of the car, then a main circuit must perform acceleration or deceleration controls as instructed by a master controller, as disclosed by Japanese Published Patent Application No. 2488/1981. In this operation, an excessively large torque will be produced by the nature of the circuit configuration, and hence an extremely large current flows in the main circuit, which may cause damage. Therefore, the conventional control device suffers from the difficulties that it is limited in operation and that it requires the provision of a protective system.

An object of the invention is thus to solve the above-described problems. More specifically, an object of the invention is to provide an electric railway car control device in which, when the direction of the operating instruction is not in agreement with the actual running direction of the vehicle, control is carried out in such a manner that electric braking is effected in agreement with the car's present running direction, thus ensuring the safety of the car at all times.

According to the invention the control device initially defined is characterized in that said selecting means is arranged to apply a braking control instruction to said inverter in accordance with the running direction of said output signal to thus control said AC main electric motor for braking when said instructed direction differs from the running direction.

When the direction of the operating instruction is not in agreement with the vehicle running direction, electric braking is effected in accordance with the running direction. Therefore, the car can be operated with safety at all times.

For a better understanding invention, and to show the same may be carried into effect, reference will now be made, by way of example, to the accompanying drawings, in which:

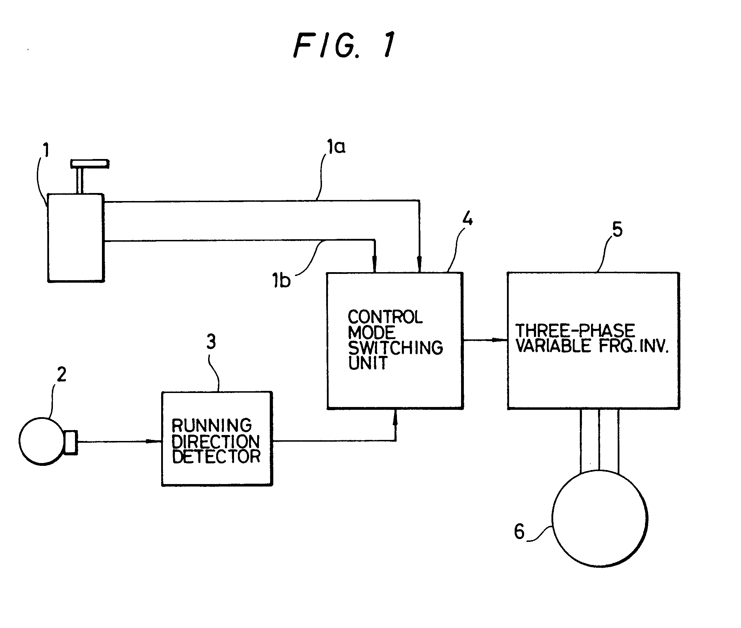

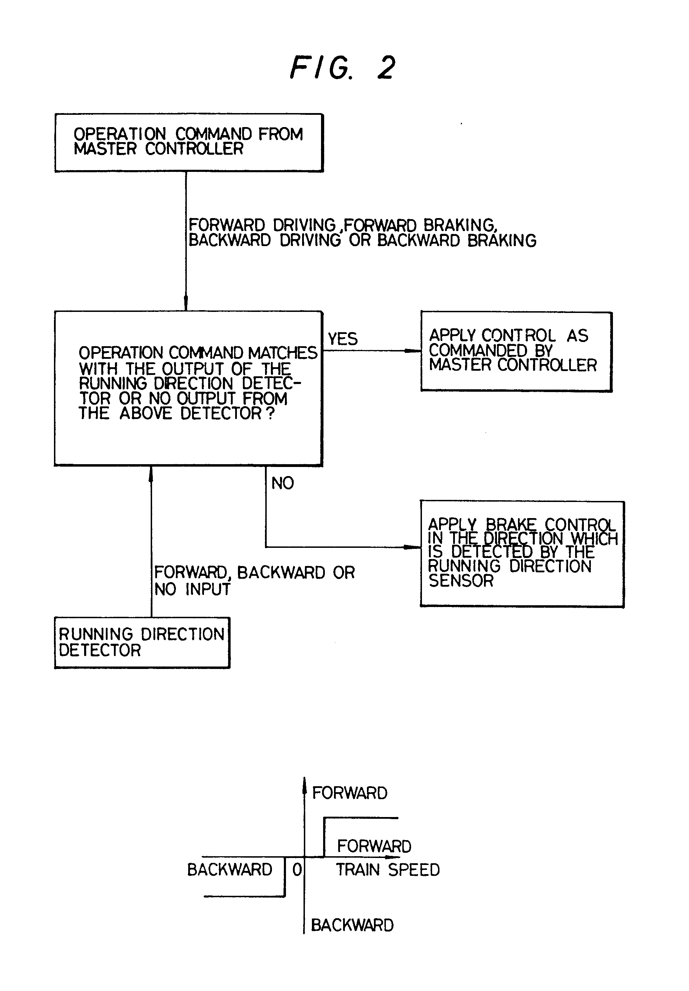

Fig. 1 is a block diagram showing a control system of an electric railway car control device constructed according to one embodiment of the invention; and Fig. 2 shows a logic flow chart showing the function of a control mode switching unit.

A preferred embodiment of the invention will be described with reference to Figure I, which is a block diagram showing a control system for a railway car. In this Figure, reference numeral I designates a master controller provided on the driver's control console of the railway car which outputs driving and braking instruction on a line 1a, and forward and reverse instructions on a line Ib; 2, a wheel rotation sensor for detecting the direction of rotation of the wheels of the car and the speed of rotation of the wheels; 3, a running-direction detector which, in response to the output of the wheel rotation sensor 2, determines the car's running direction and speed; 4, a control mode switching unit; and 5, a three-phase variable frequency inverter for driving an AC main electric motor 6. The master controller I includes a brake handle.

The following Table 1 indicates the operating functions of the control mode switching unit with the instructions from the master controller I and the output signals of the running direction detector 3.

The drawing in Fig. 2 shows the logic flow chart of the control mode switching unit 4.

The running direction detector 3 sends out the output signal (forward or backward) according to the signal from the wheel rotation sensor 2. However , when the train is stopped the running direction detector 3 produces no output. In this case the three-phase variable frequency inverter 5 is controlled according to a command from the master controller 1.

As it will be easily understood from the flow chart in Fig. 2, the control logic is summarized as shown in Table I.

The above logic flow chart may be realized by a simple electronic circuit or by simple software for microprocessor based control device for the inverter. Hence it will not require a significant cost increase for the provision of the said logic.

2

Table 1

| Operating Instruction / Output of Running Direction Detector | Instruction from Master Controller | | | |
| --- | --- | --- | --- | --- |
| | Backward | | Forward | |
| | Braking | Driving | Braking | Driving |
| During Forward Running | Forward Braking | Forward Braking | Forward Braking | Forward Driving |
| During Backward Running | Backward Braking | Backward Driving | Backward Braking | Backward Braking |
| No Output (Stopping Condition) | Backward Braking | Backward Driving | Forward Braking | Forward Driving |

The control mode switching unit 4 selects a control mode according to an operating instruction received from the master controller I and an output signal from the running direction detector 3 to provide an output signal. The output signal of the control mode switching unit 4 is utilized to operate the three-phase variable frequency inverter 5 to control the AC main electric motor 6.

As is apparent from the above description, whenever the content of the operating instruction of the master controller I is different from the vehicle running direction, control is carried out to effect braking so that the vehicle can be operated safely at all times. Furthermore, as driving or braking is effected according to the vehicle running direction, an effective accelerating force or braking force is always obtained, and therefore the vehicle can be operated with high efficiency. In the case when the car is being run on a slope, the operator can perform a braking operation, irrespective of the content of the operating instruction, to provide a sufficient braking effect in conformance with the vehicle running direction, which results in safety of operation.

In the above-described embodiment, the wheel rotation sensor 2 may be provided on the end of the rotary shaft of the AC main electric motor 6, or it may be replaced by a main electric motor rotation sensor used to control the frequency or phase of the inverter 5.

As is apparent from the above description, the electric railway car control device according to the invention includes the running direction detector 3 for detecting the vehicle running direction, and the control mode selector 4 which compares the operating instruction with the output signal of the running direction detector 3, and when the former is different from the latter, applies a brake control instruction to the inverter 5 in conformance with the running direction of the output signal. Accordingly, the vehicle can be operated in safety and with a high efficiency.

**Claims**

1. An electric railway car control device, comprising:
   a master controller (1), for providing operating instructions;
   running direction detecting means (2,3) for detecting a running direction of a railway car and producing an output signal representing the running direction;
   an inverter (5) for driving an AC main electric motor (6); and
   control mode selecting means (4) for comparing an instructed direction defined by an operating instruction provided by said master controller (1) with the running direction defined by said output signal, characterized in that:
   said selecting means (4) is arranged to apply a braking control instruction to said inverter (5) in accordance with the running direction of said output signal to thus control said AC main electric motor (6) for braking when said instructed direction differs from the running direction.

2. A control device as claimed in claim 1, wherein said running direction detecting means (2,3) comprises:
   a wheel rotation sensor (2) for detecting the direction and speed of rotation of the wheels of said railway car; and
   a running direction detector (3) receiving an output of said wheel rotation sensor (2), for detecting the running direction and speed of said wheels.

3. A control device as claimed in claim 2, wherein said wheel rotation sensor (2) is provided at an end of a rotary shaft of said main electric motor (6).

4. A control device as claimed in claim 2, wherein said wheel rotation sensor (2) comprises a main electric motor rotation sensor for controlling at least one of the frequency and phase of said inverter.

5. A drive arrangement for a railway car comprising an A.C. electric motor (6) and a control device according to any one of the preceding claims.

6. A railway car comprising a drive arrangement according to claim 5.

**Revendications**

1. Dispositif de commande de wagon de chemin de fer électrique, comprenant :
   - un contrôleur principal (1), pour fournir des instructions de fonctionnement;
   - un moyen (2, 3) de détection du sens de marche afin de détecter le sens de marche d'un wagon de chemin de fer et produire un signal de sortie représentant le sens de marche;
   - un onduleur (5) pour commander un moteur électrique principal à courant alternatif (6); et
   - un moyen (4) de sélection de mode de commande afin de comparer une direction instruite qui est définie par une instruction de fonctionnement fournie par ledit contrôleur principal (l) au sens de marche défini par ledit signal de sortie, caractérisé en ce que:
   - ledit moyen de sélection (4) est agencé de manière à appliquer une instruction de commande de freinage audit onduleur (5) en conformité avec le sens de marche dudit signal de sortie de façon à commander ainsi ledit moteur électrique principal à courant alternatif (6) pour freinage lorsque ladite direction instruite est différente du sens de marche.

4

EP 0 174 639 B1

2. Dispositif de commande selon la revendication I, dans lequel ledit moyen (2, 3) de détection du sens de la marche comprend :
- un capteur (2) de rotation de roue afin de détecter le sens et la vitesse de rotation des roues dudit wagon de chemin de fer; et
- un détecteur (3) du sens de marche recevant une sortie dudit capteur (2) de rotation des roues, afin de détecter le sens de marche et la vitesse desdites roues.

3. Dispositif de commande selon la revendication 2, dans lequel ledit capteur (2) de rotation de roue est monté à une extrémité d'un arbre rotatif dudit moteur électrique principal (6).

4. Dispositif de commande selon la revendication 2, dans lequel ledit capteur (2) de rotation de roue comprend un capteur de la rotation du moteur électrique principal pour commander au moins la fréquence ou la phase dudit onduleur.

5. Agencement de commande pour un wagon de chemin de fer comportant un moteur électrique à courant alternatif (6) et un dispositif de commande selon l'une quelconque des revendications précédentes.

6. Wagon de chemin de fer comprenant un agencement de commande selon la revendication 5.

**Patentansprüche**

1. Elektrische Steuerungsvorrichtung für einen Eisenbahnwagen, mit

einer Hauptsteuerung (I) zum Vorsehen von Betriebsbefehlen;

einer Laufrichtungsermittlungseinrichtung (2, 3) zum Ermitteln einer Laufrichtung eines Eisenbahnwagens und zum Ausgeben eines die Laufrichtung darstellenden Ausgangssignales;

einem Wechselrichter (5) zum Antreiben eines elektrischen Wechselstromhauptmotors (6); und

einer Steuerungsmodusauswahleinrichtung (4) zum Vergleichen einer angewiesenen Richtung, die durch einen von der Hauptsteuerung (I) vorgesehenen Betriebsbefehl definiert wird, mit der durch das Ausgangssignal definierten Laufrichtung,

dadurch **gekennzeichnet**,

daß die Auswahleinrichtung (4) angeordnet ist, einen Bremssteuerungsbefehl an den Wechselrichter (5) in Übereinstimmung mit der Laufrichtung des Ausgangssignales zu liefern, um somit den elektrischen Wechselstromhauptmotor (6) zu steuern, zu bremsen, wenn die angewiesene Richtung von der Laufrichtung abweicht.

2. Steuerungsvorrichtung nach Anspruch I,
dadurch **gekennzeichnet**, daß die Laufrichtungsermittlungseinrichtung (2, 3) umfaßt:

einen Raddrehungssensor (2) zum Ermitteln der Drehrichtung und -geschwindigkeit der Räder des Eisenbahnwagens; und

einen Laufrichtungsdetektor (3), der eine Ausgabe des Raddrehungssensors (2) empfängt, um die Laufrichtung und Geschwindigkeit der Räder zu ermitteln.

3. Steuerungsvorrichtung nach Anspruch 2,
dadurch **gekennzeichnet**, daß der Raddrehungssensor (2) an einem Ende einer Drehwelle des elektrischen Hauptmotors (6) vorgesehen ist.

4. Steuerungsvorrichtung nach Anspruch 2,
dadurch **gekennzeichnet**, daß der Raddrehungssensor (2) einen Hauptelektromotor-Drehungssensor zum Steuern von Frequenz und/oder Phase des Wechselrichters umfaßt.

5

**5.** Antriebsanordnung für einen Eisenbahnwagen, welche einen Wechselstromelektromotor (6) und eine Steuerungsvorrichtung nach einem der vorangehenden Ansprüche umfaßt.

**6.** Eisenbahnwagen, umfassend eine Antriebsanordnung nach Anspruch 5.

# FIG. 1

# FIG. 2

```
┌─────────────────────────────┐
│ OPERATION COMMAND FROM      │
│ MASTER CONTROLLER           │
└─────────────────────────────┘
              │
              │
    FORWARD DRIVING ,FORWARD BRAKING,
    BACKWARD DRIVING OR BACKWARD BRAKING
              │
              ▼
┌─────────────────────────────┐   YES   ┌─────────────────────────────┐
│ OPERATION COMMAND MATCHES   │────────▶│ APPLY CONTROL AS            │
│ WITH THE OUTPUT OF THE      │         │ COMMANDED BY                │
│ RUNNING DIRECTION DETEC-    │         │ MASTER CONTROLLER           │
│ TOR OR NO OUTPUT FROM       │         └─────────────────────────────┘
│ THE ABOVE DETECTOR ?        │
└─────────────────────────────┘
         │            │
         │            NO
         │            │             ┌─────────────────────────────┐
         │            └────────────▶│ APPLY BRAKE CONTROL         │
         │                          │ IN THE DIRECTION WHICH      │
    FORWARD, BACKWARD OR            │ IS DETECTED BY THE          │
    NO INPUT                        │ RUNNING DIRECTION           │
         │                          │ SENSOR                      │
┌─────────────────────────┐        └─────────────────────────────┘
│ RUNNING DIRECTION       │
│ DETECTOR                │
└─────────────────────────┘
```

```
            │ FORWARD
            │
            │      ┌──────────
            │      │  FORWARD
            │      │
────────────┼──────┼──────────▶
BACKWARD   │0│  TRAIN SPEED
    ───────┘      │
    BACKWARD      │
            │
            │ BACKWARD
```